# EUROPEAN PATENT SPECIFICATION

(11) **EP 1 028 250 B1**
(45) Date of publication and mention of the grant of the patent: **15.12.2004**
(21) Application number: 00102475.1
(22) Date of filing: 04.02.2000
(51) Int. Cl.: F02M 61/14, F02M 55/02, F02M 63/02, F02M 69/46

(54) **Fuel injection device for direct fuel injection engine**
Kraftstoffeinspritzvorrichtung für Brennkraftmaschine mit Direkteinspritzung
Système d'injection de carburant pour moteur à injection directe

(30) Priority: 12.02.1999 JP 3421099
(43) Date of publication of application: 16.08.2000
(73) Proprietor: Mazda Motor Corporation, Aki-gun, Hiroshima (JP)
(72) Inventor: Tateishi, Masahiro, c/o Mazda Motor Corporation, Aki-gun, Hiroshima (JP); Nishimoto, Toshiaki, c/o Mazda Motor Corporation, Aki-gun, Hiroshima (JP); Hashiguchi, Tadasu, c/o Mazda Motor Corporation, Aki-gun, Hiroshima (JP); Takahashi, Hiroshi, c/o Mazda Motor Corporation, Aki-gun, Hiroshima (JP)
(74) Representative: Kirschner, Klaus Dieter, Dipl.-Phys.

(56) References cited:
- EP-A- 0 964 151
- EP-A- 1 132 612
- PATENT ABSTRACTS OF JAPAN vol. 1997, no. 01, 31 January 1997 (1997-01-31) -& JP 08 246992 A (MITSUBISHI MOTORS CORP), 24 September 1996 (1996-09-24)

## Description

The present invention relates to a fuel injection device for a direct fuel injection engine which sprays fuel directly into combustion chambers of cylinders of the direct fuel injection engine and, more particularly, to an arrangement of fuel distribution pipe injection engine and, more particularly, to an arrangement of a fuel distribution pipe assembly for distributing fuel to fuel injectors of the fuel injection device for a direct fuel injection engine.

Various fuel injection devices of this kind for a direct fuel injection engine have been proposed. Such a fuel injection device disclosed in, for example, Japanese Unexamined Patent Publication No. 8 - 246992 has fuel injectors disposed so as to put their injection nozzles in close proximity to combustion chambers, respectively, and a fuel distribution pipe assembly by which fuel injectors are pressed against and secured to an engine body from their fuel inlet ends through which fuel is delivered. In this arrangement of fuel injection device, a fuel distribution pipe of the fuel distribution pipe assembly is positioned and bolted to a cylinder head of the direct fuel injection engine so as to approximately perpendicularly intersect longitudinal axes of the fuel injectors which extend laterally from one side of the cylinder head. Each fuel injector at the fuel inlet end is fixed to the fuel distribution pipe through a sealing member such as an O-ring. That is to say, while utilizing the fuel distribution pipe assembly, more specifically the fuel distribution pipe, as a reinforcing member to position the fuel injectors relatively to the cylinder head, it is connected air-tightly to the fuel inlet ends of the fuel injectors by means of sealing members.

Typically, engines of a type having four valves, two intake valves and two exhaust valves, for each cylinder are provided with a spark plug laid-out so as to be encircled by the these valves and in approximate alignment with a vertical center axis of the cylinder. In such an engine, it is preferred to dispose the fuel injector in proximity to the periphery of the combustion chamber so as to cause no mechanical interference with both spark plug and any one of the intake and exhaust valves and, for the purpose of avoiding or significantly reducing an influence of exhaust heat on the fuel injector, to position the fuel injector as closely to the intake ports as possible. In consequence, the fuel injector is positioned below the two intake ports and in an in-between position between the two intake ports, so as to make a spray of fuel into the combustion chamber from the flank. In this instance, in order for the engine to eliminate or reduce a problem of adhesion of sprayed fuel to a side wall of the cylinder, it is necessary to incline the fuel injector at an angle as small as possible with respect to a vertical center axis of the cylinder so as to spray and direct fuel toward the piston top from above. That is, the fuel injector has to be in a position as erected as possible and in close proximity to the intake port.

In the prior art fuel injection device equipped with by a fuel distribution pipe which is positioned so as to approximately perpendicularly intersect the longitudinal axes of fuel injectors, positioning the fuel injector in close proximity to an intake port causes mechanical interference with a cylinder head and/or an intake manifold, which results in difficulty in positioning the fuel injector at a desired angle with aggravation of fuel consumption efficiency and an increase in harmful emissions.

It is therefore an object of the present invention to provide a fuel injection device including fuel injectors arranged at desired angles with respect to cylinders which is realized by contriving an arrangement of fuel distribution pipe assembly for a direct fuel injection engine equipped with a fuel injector which is positioned below each of intake ports opening at one side of the direct fuel injection engine.

The foregoing object of the present invention is accomplished by arranging a main fuel distribution pipe of the fuel distribution pipe assembly offset on a side of longitudinal axes of the fuel injectors opposite in a vertical direction to a side of the longitudinal axes of the fuel injectors on which intake ports are arranged and securing the fuel distribution pipe assembly to the engine at positions between the main fuel distribution pipe and the longitudinal axes of the fuel injectors.

According to a preferred embodiment of the present invention, the fuel injection device which is installed to a direct fuel injection engine having intake ports, each of the intake ports having one end opening in a side surface at one of opposite sides of the direct fuel injection engine in a horizontal direction with respect to a longitudinal axis of an output shaft of the direct fuel injection engine and another end opening to a combustion chamber of each of cylinders of the direct fuel injection engine, and fuel injectors which are positioned with longitudinal axes thereof extending approximately perpendicularly to the longitudinal axis of the output shaft, each of the fuel injector having a fuel injection nozzle end located in close proximity to the another end of the intake port so as to spray fuel directly into the combustion chamber and a fuel inlet end connected to a fuel distribution pipe assembly disposed on the one side of the direct fuel injection engine, is characterized by that the fuel distribution pipe assembly comprises a main fuel distribution pipe extending in a longitudinal direction of the direct fuel injection engine from the front to the back in which the longitudinal axis of the output shaft extends and disposed on one side of a longitudinal axis of the fuel injector opposite to another side of the longitudinal axis of the fuel injector with respect to the longitudinal axis of the output shaft on which the intake port extends, discrete fuel distribution pipes branching off from the main fuel distribution pipe and leading to the fuel injectors, respectively, and distribution pipe assembly fixing means for securing the fuel distribution pipe assembly to the direct fuel injection engine which is disposed between the longitudinal axis of the fuel injector and the main fuel distribution pipe.

Because the offset arrangement of the main fuel distribution pipe on one side of the longitudinal axis of the fuel injector opposite in vertical direction to another side on which the intake ports are arranged, even when the fuel injector is positioned as erectly as possible and in close proximity to the intake port, there is no mechanical interference of the main fuel distribution pipe with the cylinder head, as a result of which the fuel injector can be put at a greater angle than fuel injectors of the prior art fuel injection devices, fuel injector and the intake ports with an effect of eliminating aggravation of fuel consumption efficiency and an increase in harmful emissions.

Fuel, which is delivered to the fuel injector from the discrete fuel distribution pipes through the main fuel distribution pipe and sprayed into the combustion chamber with a considerably high pressure by the fuel injector, the discrete fuel distribution pipes generally encounter strong reaction force from the fuel injector. Therefore, the fuel injection device that is accompanied by the main fuel distribution pipe offset from the longitudinal axis of the fuel injector likely that of the present invention has apprehensions of fuel leakage due to an ascent of the discrete fuel distribution pipe from the fuel injector and receives a strong twisting moment against the main fuel distribution pipe, which causes a decline in reliability of the fuel injection device. As contrasted with the prior art, the fuel injection device of the present invention having the arrangement that the fuel distribution pipe assembly is secured to the engine by the fixture means at locations between the main fuel distribution pipe and the longitudinal axis of the fuel injector as viewed from the longitudinal axis of the output shaft. This arrangement provides sufficiently firm abutment between the discrete fuel injection pipes and the fuel injectors with an effect of reliably preventing fuel leakage between them. Moreover, the main fuel distribution pipe is kept free from a twisting moment by securing the discrete fuel injection pipes to the engine by the fixture means.

According to another preferred embodiment of the present invention, the fuel injection device in which the fuel injector is secured to the direct fuel injection engine by fuel injector fixture means disposed in an approximately same position in a direction perpendicularly to the longitudinal axis of the output shaft as a position in which the fuel injector is arranged and the distribution pipe assembly fixture means is disposed on one of opposite sides of the fuel injector in a vertical direction of the direct fuel injection engine with respect to the longitudinal axis of the fuel injector, the fuel injector is firmly and reliably secured to the engine with an effect of preventing mechanical interference between the fuel injector fixture means and the distribution pipe assembly fixture means.

According to another preferred embodiment of the present invention, the fuel injection device in which the fuel injector at the is provided with coupling means through which the fuel injector is electrically connected to a fuel injection control system by way of a wire, the coupling means being disposed on another side of the opposite sides of the fuel injector in the vertical direction of the direct fuel injection engine with respect to the longitudinal axis of the fuel injector, since the distribution pipe assembly fixture means and the coupling means are disposed on opposite sides of the fuel injector opposite, respectively, in a direction perpendicular to the longitudinal axis of the output shaft, the utilization is effectively made of a space around the fuel injector, which realizes a compact arrangement of the fuel distribution pipe assembly.

According to another preferred embodiment of the present invention, the fuel injection device in which the one side surface of the direct fuel injection engine in which the intake port at the one end thereof opens is formed so as to project laterally outward from a side of the direct fuel injection engine, and the fuel injector and the fuel injector fixture means are disposed in a position closer to the fuel injection nozzle end of the fuel injector in a direction of the longitudinal axis of the fuel injector than the one side surface, the coupling means and the fuel injector fixture means are compactly arranged on an inner side of the one side surface of the direct fuel injection engine in which the intake port at one end opens.

According to another preferred embodiment of the present invention, the fuel injection device in which a fuel pressure sensor operative to detect pressure of fuel in the fuel distribution pipe assembly is installed to an end of the main fuel distribution pipe on a front side of the fuel injector in the longitudinal direction where the distribution pipe assembly fixture means is positioned with respect to the fuel injector, the pressure sensor, which is heavy, is disposed at a short distance from the distribution pipe assembly fixture means with an effect of being stably supported on the fuel injection device by means of the fuel distribution pipe assembly.

According to another preferred embodiment of the present invention, the fuel injection device in which the intake ports are provided two for each cylinder and the fuel injector is disposed between the two intake ports, each intake port having an irregular cross section so that the fuel injector is put as closely to the intake port as possible without mechanical interference with the intake port and the fuel distribution pipe assembly fixture means is disposed closer to one of the two intake ports than another of the two intake ports, the fuel injector is put at a desired angle and far more erectly.

According to still another preferred embodiment of the present invention, in the case where the fuel injection device is installed to a direct fuel injection engine of a type having cylinders arranged in a straight row in the longitudinal direction and provided two intake ports and two exhaust ports, two intake valves and two exhaust valves and a spark plug for each cylinder, the intake and exhaust valves are arranged so as to encircle a vertical center axis of the cylinder and the spark plug is disposed so as to be encircled by the intake and exhaust valves. In this embodiment, although the fuel injector is restricted in position approximately below the related intake ports, the fuel injector is placed in close proximity to the intake ports and put as erectly as possible without causing mechanical interference of the fuel distribution pipe assembly with the engine, which is always desirable.

According to a further preferred embodiment of the present invention, the fuel injection device is installed to a direct fuel injection engine provided on one of opposite sides thereof with intake passage means which is in communication with each the cylinder and extends laterally outward from the direct fuel injection engine and then downward so as to surround the fuel distribution pipe assembly. In this embodiment, the engine can be compactly arranged in an engine compartment without causing mechanical interference with a hood of the engine compartment. Although an intake manifold in which the intake passage means is formed is apt to mechanically interfere with the fuel distribution pipe assembly, nevertheless, it is easy to eliminate mechanical interference between the intake manifold and the fuel distribution pipe assembly by arranging the main fuel distribution pipe opposite in a vertical direction to the intake ports with respect to the longitudinal axis of the fuel injector, i.e. below the longitudinal axis of the fuel injector.

The above and other objects and features of the present invention will be more clearly understood from the following description when read in conjunction with the accompanying drawings, wherein the same reference numerals have been used to denote same or similar parts throughout the drawings, and in which:
Figure 1 is a schematic cross sectional view of part of an engine equipped with a fuel injection device according to a preferred embodiment of the present invention;
Figure 2 is a top view of a cylinder head of the engine shown in Figure 1;
Figure 3 is a side view of the cylinder head of the engine shown in Figure
Figure 4 is an enlarged cross sectional view of a fuel injector installed to the cylinder head;
Figure 5 is a plan view of a nozzle holder;
Figure 6 is a cross sectional view of Figure 5 taken along line VI - VI;
Figure 7 is a view of an arrangement of fuel injectors with respect to the cylinder head as viewed from the upper right of the engine;
Figure 8 is a front view of a fuel distribution pipe assembly;
Figure 9 is a side view-of the fuel distribution pipe assembly; and
Figure 10 is a top view of the fuel distribution pipe assembly.

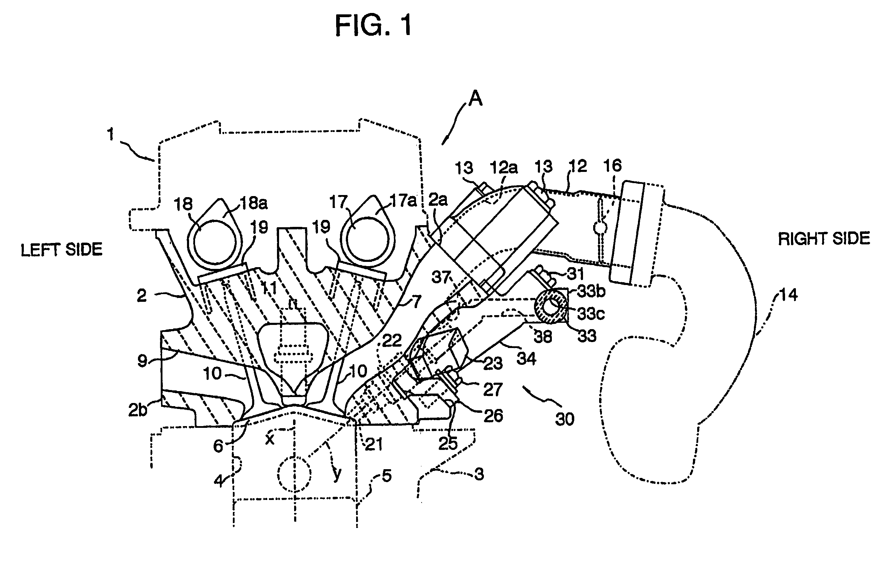

Referring to the drawings in detail, and in particular to Figure 1 schematically showing one of combustion chambers and its associated parts of cylinders of a direct fuel injection engine 1 equipped with a fuel injection device A according to an embodiment of the present invention, the engine 1 comprises a cylinder block 3 formed with cylinder bores 4 (only one of which is shown) which receive pistons 4, respectively, and a cylinder head 2 mounted on the cylinder block 3. The cylinder head 2 has a V-shaped form by right and left banks inclined upward out on opposite sides of a crankshaft (not shown) of the engine 1. A combustion chamber 6 of each cylinder is formed between a wedge-shaped piston top of the piston 5, an under wall of the cylinder head 2 and a side wall of the cylinder 4. The under wall of the cylinder head 2, which forms the top of the combustion chamber 6, is shaped so as to mate the wedge-shaped piston top. Specifically, the under wall of the cylinder head 2 is formed with inclined planes extending towards opposite sides (right and left as viewed in Figure 1) from a top center of the combustion chamber 6 to approximately an under surface of the cylinder head 2 (an interface between the cylinder head 2 and the cylinder block 3) The cylinder head 2 is formed with two intake ports 7 (only one of which is shown in Figure 1) in the right side inclined plane and two exhaust ports 9 (only one of which is shown in Figure 1) in the left inclined plane for each cylinder 4. Intake valves 10 open and close the intake ports 7 at proper timings, respectively. Similarly, exhaust valves 10 open and close the exhaust ports 9 at proper timings, respectively. These intake and exhaust valves 10 for each cylinder 4 are arranged so as to surround a vertical center axis x of the cylinder 4. The cylinder head 2 is provided with an spark plug 11. This spark plug 11 is approximately aligned with the vertical center axis x of the cylinder 4 and extends down into the combustion chamber 6. The intake port 7 extends upward right from the combustion chamber 6 to a side surface 2a of the right bank which projects laterally outward from the cylinder head 2 and inclining with respect to the vertical center axis x of the cylinder 4. The exhaust port 9 extends approximately horizontally or slightly upward left from the combustion chamber 6 to a side surface 2b of the right bank which is in parallel to the vertical center axis x of the cylinder 4.

An intake manifold assembly comprising two parts, namely a downstream intake manifold 12 and an upstream intake manifold 14 is connected to the side surface 2a of the right bank of the cylinder head 2. Specifically, the downstream intake manifold 12 at its downstream end flange is secured to the cylinder head 2 by fixing bolts so as to be in communication with the intake port 7 and extends laterally outward and approximately horizontally from the cylinder head 2. The upstream intake manifold 14 at its downstream end is connected the upstream end of the downstream intake manifold 12 and curves and extends downward below the lower of the under surface of the cylinder head 2 so as to surround a fuel distribution pipe assembly 30 which will be described in detail later. The downstream intake manifold 12 has a plurality of discrete pipes 12a, two (first and second) for each cylinders 4, i.e. one for each intake port 7. Either one, e.g. the second discrete pipe 12a in this embodiment, is provided with an air stream control valve 16 operative to control an air stream in the combustion chamber 6. Specifically, while the air stream control valve 16 is actuated to close the second discrete pipe 12a, and hence the intake port 7 in communication with the second discrete pipe 12a, almost the entire part of intake air flows into the combustion chamber 6 through the first discrete pipe 12a and the intake port 7 in communication with the first discrete pipe 12a with an effect of creating a strong swirl of air in the combustion chamber 6. On the other hand, when the air stream control valve 16 is caused to open the second discrete pipe 12a, and hence the intake port 7 in communication with the second discrete pipe 12a, it admits intake air to flow into the combustion chamber 6 through the second discrete pipe 12a and the intake port 7 in communication with the second discrete pipe 12a as well as through the first discrete pipe 12a and the intake port 7 in communication with the first discrete pipe 12a. As the air stream control valve 16 gradually opens the second discrete pipe 12a, the amount of intake air admitted to flow through the second discrete pipe 12a is increased. As a result of which, while a swirl component of an intake air stream in the combustion chamber 6 grows weak, a tumble component of the intake air stream is enhanced.

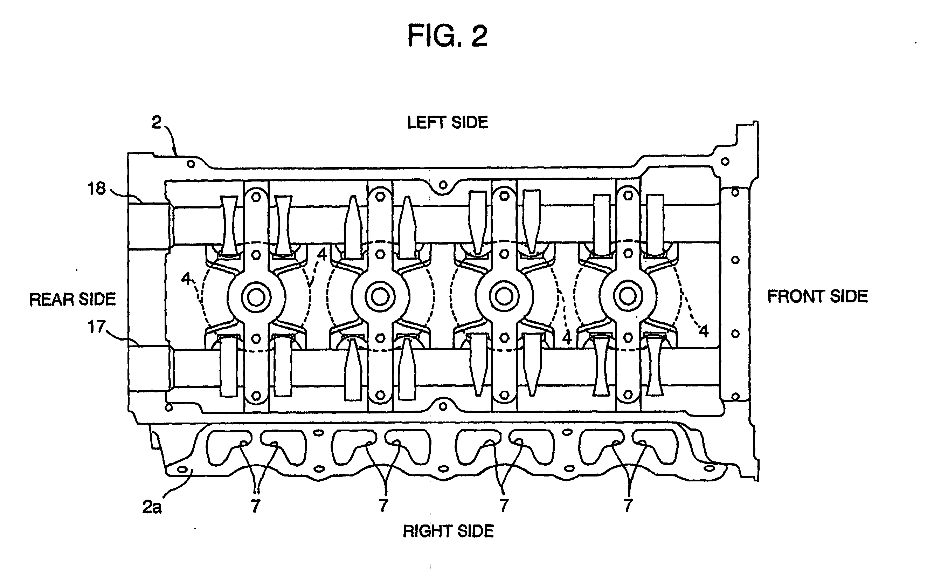

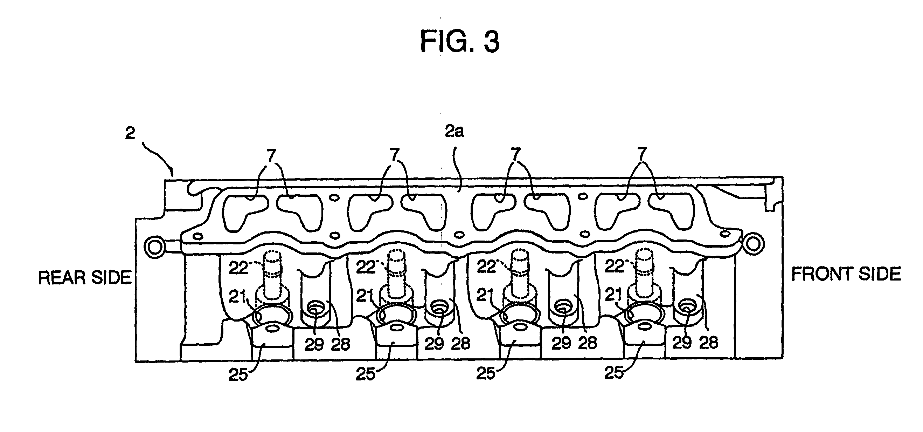

As shown in Figures 2 and 3, the engine 1 is, for example, of an in-line four cylinder type having a straight row of four cylinders 4 arranged in a lengthwise direction of the engine 1 (the horizontal direction in the plane of Figure 2) in which the crankshaft of the engine 1 extends. As clearly seen in Figure 2, the side surface 2a of the right bank of the cylinder head 2, which is the interface between the cylinder head 2 and the intake manifold, specifically the downstream intake manifold 12, extends over between front end rear ends of the cylinder head 2 and is formed therein end openings of the intake ports 7 arranged in a straight row in the lengthwise direction of the engine 1.

Referring back to Figure 1, the engine 1 is provided with an intake camshafts 17 and an exhaust camshaft 18 supported for rotation on the top of the cylinder head 2. These camshafts 17 and 18 are connected to the crankshaft of the engine 1 by a timing belt (not shown). The intake camshaft 17 is formed with one intake cam 17a thereon for each intake valve 10. Similarly, the exhaust camshaft 18 is formed with one exhaust cam 18a thereon for each exhaust valve 10. The intake camshaft 17 is rotated by and in synchronism with the crankshaft to move reciprocally up and down the intake valves 10 through valve lifters 19, so as thereby to open and close the intake ports 7 at an appropriate timing. Similarly, the exhaust camshaft 18 is rotated by and in synchronism with the crankshaft to move reciprocally up and down the intake valves 10 through valve lifters 19, so as thereby to open and close the exhaust ports 9 at an appropriate timing.

As clearly seen in Figures 1 and 3, the cylinder head 2 at its right side is formed with one bore 21 for each cylinder 4. The bore 21 extends below the two intake ports 7 for the combustion chamber 7 of each cylinder 4 and leads to the combustion chamber 7 of each cylinder 4. The injector bore 21, which receives therein a fuel injector 22, is shaped and located so that a nozzle of the fuel injector 22 is positioned in close proximity to valve heads of the two intake valves 10 for each cylinder 4 and facing the peripheral edge of the combustion chamber 6 so as to spray fuel obliquely from side into the combustion chamber 6. In the case where fuel is sprayed from side into the combustion chamber 6, it is preferred to slantingly put the fuel injector 22 as erectly as possible for the purpose of preventing fuel from adhering to the side wall of the cylinder 4. Therefore, in this embodiment, the intake port 7 is shaped in an irregular cross section so as to match with the external form of the fuel injector 22 as shown in Figures 2 and 3. Specifically, the two intake ports 7 for each cylinder 4 have approximately symmetric cross sections so that the fuel injector 22 is put between the two intake ports 7 with a longitudinal axis y at 45° with respect to the vertical center axis x of the cylinder 4. In this instance, in order to prevent fuel from adhering to the side wall of the cylinder 4, the fuel injector 22 may be installed in the cylinder head 2 with the longitudinal axis y at approximately less than 50° with respect to the vertical center axis x of the cylinder 4.

While the engine 1 operates in a specified range of lower engine speeds and lower engine loads, the fuel injector 22 sprays fuel in a later stage of a compression stroke of the piston 5 of the cylinder 4, so as to bring about stratified combustion which is combustion of a stratified fuel mixture unevenly distributed around the spark plug 11 in the combustion chamber 6. On the other hand, while the engine 1 operates in a range of higher engine speeds or higher engine loads, the fuel injector 22 sprays fuel in a early stage of an intake stroke of the piston 5 of the cylinder 4, so as to bring about homogeneous combustion which is combustion of a fuel mixture evenly distributed in the combustion chamber 6. This type of fuel injection is performed under control by a fuel injection control system which is not shown but well known in the art. The fuel injector 22 is provided with coupling means 23 such a connecting coupler externally attached thereto to which a wire (not shown) is connected to the fuel injection control system. It is preferred to incorporate high pressure swirl injectors for the fuel injectors 22. Such a high pressure swirl injector produces a swirl of fuel spray with an effect of promoting atomization of fuel. Furthermore, the high pressure swirl injector makes a spray of fuel at a spray angle of less than approximately 30° in fuel injection in a later stage of a compression stroke wherein the combustion chamber 6 is under a high pressure and, on the other hand, sprays fuel at a greater angle in fuel injection in an intake stroke wherein the combustion chamber 6 is under a low pressure.

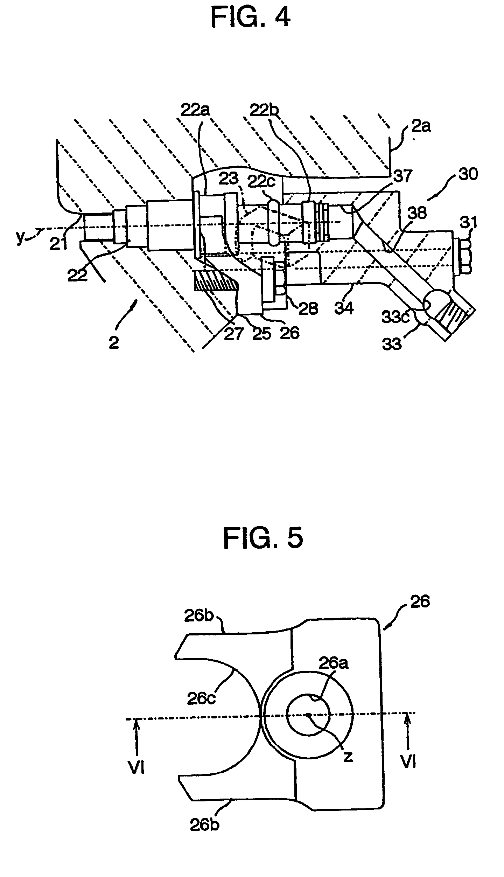

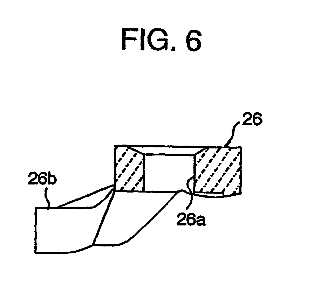

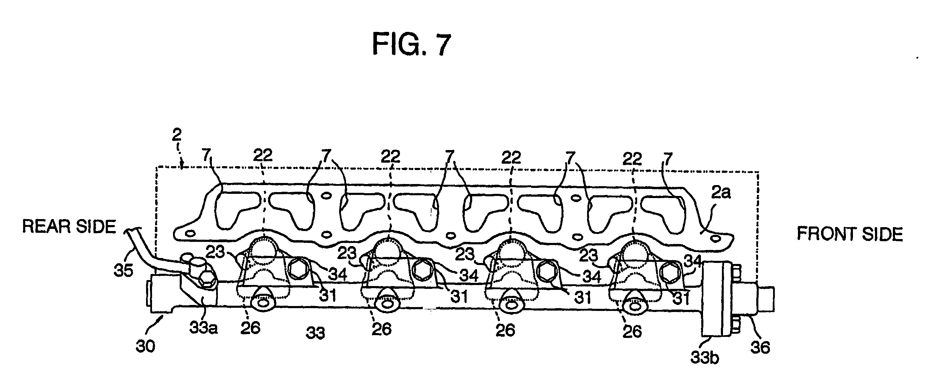

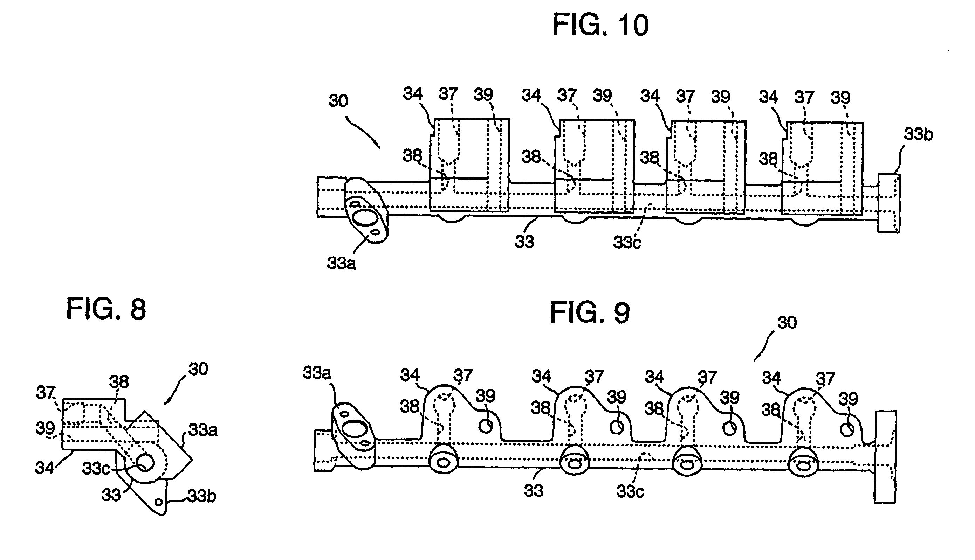

The fuel injection device A will be hereafter described in detail with reference to Figures 4 through 10. The cylinder head 2 at the right side (shown in Figure 3) is formed with one first pedestal 25 for each cylinder 4. The first pedestal 25 laterally projects below the injector bore 21 in which the fuel injector 22 is received and is provided with a nozzle holder 26 secured thereto by fixing bolts 27. As shown in detail in Figures 5 and 6, the nozzle holder 26 has a generally rectangularly-shaped body with a through bore 26a formed at a center thereof and a semi-circular support 26c between a pair of arms 26b extending laterally down as seen in Figure 6. As seen in Figure 4, the nozzle holder 26 is secured to the first pedestal 25 with the center axis z of the through bore 26a put at an angle of, for example, 45° in this embodiment with respect to the vertical center axis x of the cylinder 4 and the arms 26b extending obliquely up. The nozzle holder 26 thus formed and secured to the first pedestal 25 receives the flange 22a of the fuel injector 22 in the semi-circular support 26c and held between the arms 26b. In this manner, the fuel injector 22 is installed to the cylinder head 2 with the longitudinal axis y at an angle of 45° with respect to the vertical center axis x of the cylinder 4 and remains firmly held in position against a considerably high pressure developed in the combustion chamber 6. The cylinder head 2 at the right side (shown in Figure 3) is formed with one second pedestal 28 for each cylinder 4 on the front side of the engine 1 relative to the first pedestal 25 for the cylinder 4 as seen in Figure 3. The second pedestal 28 laterally projects far more remotely from the right side of the cylinder head 2 than the first pedestal 25 and at a greater height from the bottom of the cylinder head 2 than the first pedestal 25. The second pedestal 28 is formed with a threaded bore 29 (see Figure 3) into which fuel distribution pipe assembly fixture means such as a fixture bolt 31 is driven so as thereby to couple a fuel distribution pipe assembly 30 to the fuel injector 22. As shown in detail in Figures 8 through 10, the engine 1 at the right side is provided with the fuel distribution pipe assembly 30 which comprises a main fuel distribution pipe 33 extending in approximately parallel to the right side of the cylinder head 2 and four discrete fuel distribution pipes 34 which are formed integrally with the main fuel distribution pipe 33 and extend perpendicularly from the main fuel distribution pipe 33 to the fuel injectors 22, respectively. The main fuel distribution pipe 33 at one of opposite ends on the rear side of the engine 1 is provided with a connecting fixture 33a through which a fuel delivery pipe 35 is air-tightly connected to the main fuel distribution pipe 33. The fuel distribution pipe assembly 30 is secured to the cylinder head 2 by the fixture bolts 31 at locations on the front side of the engine 1 with respect to the fuel injectors 22, respectively. The fuel injectors 22, the nozzle holders 26, the connecting couplers 23 and the fixture bolts 31 are laid out in relative positions as described above with reference to Figure 7. That is to say, while the fuel injector 22 and the nozzle holder 26 for each cylinder 4 are arranged at approximately same locations in the lengthwise direction of the engine 1, the fixture bolt 31 and the connecting coupler 23 for the cylinder 4 are arranged on opposite side, namely on the front side and the rear side, of the fuel injector 22 in the lengthwise direction of the engine 1, respectively. This layout provides the efficient utilization of a space around the fuel injector 22 and realizes compact arrangement of these structural elements 22, 23, 26 and 31 without mechanical interference between them. Furthermore, as seen in Figure 1, the connecting coupler 23 and the nozzle holder 26 are arranged more closely to the nozzle end of the fuel injector 22 than the side surface 2a of the cylinder head 2 to which the intake manifold assembly (30) is attached, i.e. more closely to the center of the engine 1 than the side surface 2a of the cylinder head 2, as a result of which a compact arrangement of the structural elements 22, 23, 26 and 31 is realized.

A high pressure fuel pump (not shown) delivers fuel to the fuel distribution pipe assembly 30 by way of the fuel delivery pipe 35. The main fuel distribution pipe 33 at another end on the front side of the engine 1 is integrally formed with a flange 33b to which a fuel pressure sensor 36 operative to detect pressure of fuel in the main fuel distribution pipe 33 is attached. That is to say, the fuel pressure sensor 36 is installed to the main fuel distribution pipe 33 at one end on the front side of the engine 1. As apparent, the fuel pressure sensor 36, which is a relatively heavy structural element of the engine 1, can be located at a considerably short distance from the fixture bolt 31 driven into the second pedestal 28 for the first cylinder 4 which is referred to the foremost cylinder in close proximity to the front end of the engine 1, so as to be stably supported on the fuel distribution pipe assembly 30, more particularly on the main fuel distribution pipe 33. The

As shown in Figure 4, the discrete fuel distribution pipes 34 is formed with a bore 37 operative as an injector holder 37 and a part of a fuel distribution passage which is in communication with a fuel distribution passage 38 branching off from a fuel delivery passage 33c of the main fuel distribution pipe 33 and receives therein a base part of the fuel injector 22. There are provided sealing rings 22b and 22c such as O-rings for creating air-tight seal between the fuel injector 22 and the discrete fuel distribution pipes 34. Pressurized fuel delivered from the high pressure fuel pump through the fuel delivery pipe 35 is delivered into the fuel delivery passage 33c of the main fuel distribution pipe 33 and then distributed into the fuel distribution passage 38 of the discrete fuel distribution pipes 34. The fuel is further introduced into the injector bore 37 and then directed to a fuel inlet of the fuel injector 22. The discrete fuel distribution pipe 34 for each cylinder 4 is formed with a through bore 39 which is positioned so as to meet the second pedestal 28 of the cylinder head 2 when installed to the cylinder head 2 and through which the fixture bolt 31 passes.

As clearly understood from the above description, the fuel injection device A of the present invention has the feature that the fuel distribution pipe assembly 30 has the main fuel distribution pipe 33 positioned on one side of the longitudinal axis y of the fuel injector 22 opposite to another side thereof on which the intake ports 7 are arranged in the lengthwise direction of the engine 1 as shown in Figures 1 and 4. That is, the main fuel distribution pipe 33 is offset on a side remote from the cylinder head 2 with respect to the longitudinal axis y of the fuel injector 22, and the discrete fuel distribution pipe 34 has the fuel injection passages 37 and 38 connected in an L-shaped form. Therefore, even when arranging the fuel injector 22 in close proximity to and between the two intake ports 7 and putting it as erectly as possible, there occurs no mechanical interference between the main fuel distribution pipe 33 and any one of the cylinder head 2 and the intake manifold assembly, specifically the downstream intake manifold 12. In other words, the fuel injection device A of the present invention makes it possible to install the fuel injector 22 in more erected position as compared with the conventional fuel injection devices.

The fixture bolts 31 by which the fuel distribution pipe assembly 30 is secured to the cylinder head 2 are positioned between the longitudinal axes y of the fuel injectors 22 and the main fuel distribution pipe 33 extending along one side of the cylinder head 2 as shown in Figures 1 and 4 and secure the discrete fuel distribution pipes 34 to the cylinder head 2. Therefore, in the fuel injection device A of the present invention with the main fuel distribution pipe 33 laterally offset away from the intake ports 7, the fuel distribution pipe assembly 30 can be installed to the engine 1 without mechanical interference with the cylinder head 2, as a result of which the fuel injector 22 is possible to be put in a slanted position at a more desired angle as compared with the conventional fuel injection devices with a main fuel distribution pipe 33 arranged on a line intersecting the longitudinal axes of fuel injectors at an approximately right angle. In consequence, adhesion of fuel sprayed through the fuel injector 22 to the side wall of the combustion chamber 6 is sufficiently mitigated with an effect of preventing aggravation of fuel consumption efficiency and an increase in harmful emissions. Moreover, the arrangement of the fixture bolts 31 between the longitudinal axes y of the fuel injectors 22 and the main fuel distribution pipe 33 provides sufficiently strong fixing of the discrete fuel distribution pipes 34 to the cylinder head 2 so that the discrete fuel distribution pipes 34 withstand strong reaction force thereon that is caused when the fuel injectors 22 make fuel injection. Therefore, fuel leakage between the discrete fuel distribution pipes 34 and the fuel injectors 22 is reliably prevented. In addition, because the fixture bolts 31 secure the respective discrete fuel distribution pipes 34 directly to the cylinder head 2, there is no twisting moment applied to the main fuel distribution pipe 33 by the discrete fuel distribution pipes 34, so as to increase the reliability of the fuel distribution pipe assembly 30.

In the case where the engine 1 is of an in-line four cylinder type such as shown in this embodiment that has the spark plugs 11 each of which is put in alignment with the vertical center axis x of the cylinder 4 and the fuel injectors 22 generally restricted in position below the intake ports 7, the fuel injectors 22 can be placed in close proximity to the intake ports 7 and put as erectly as possible without causing mechanical interference of the fuel distribution pipe assembly 30 with the cylinder head 2, which is always desirable. Furthermore, in the case where the intake manifold assembly 30 comprising two parts, downstream intake manifold 12 and upstream intake manifold 14, is shaped so as to extend downward and surround the fuel distribution pipe assembly 30 likely in this embodiment, the engine can be compactly arranged in an engine compartment without causing mechanical interference with a hood of the engine compartment. Moreover, it is easy to eliminate mechanical interference between the intake manifold and the fuel distribution pipe assembly by virtue of the arrangement of the main fuel distribution pipe below the longitudinal axis of the fuel injector.

## Claims

1. A fuel injection device (A) for a direct fuel injection engine (1) which has intake ports (7), each said intake port (7) having one end opening in a side surface (2a) at one of opposite sides of said direct fuel injection engine (1) in a horizontal direction with respect to a longitudinal axis of an output shaft of said direct fuel injection engine (1) and another end opening to a combustion chamber (6) of each of cylinders (4) of said direct fuel injection engine (1), and the fuel injection device (A) having fuel injectors (22) which are positioned with longitudinal axes thereof extending approximately perpendicularly to said longitudinal axis of said output shaft, each said fuel injector (22) having a fuel injection nozzle end located in close proximity to said another end of said intake port (7) so as to spray fuel directly into said combustion chamber (6) and a fuel inlet end connected to a fuel distribution pipe assembly (30) disposed on said one side of said direct fuel injection engine (1), and being **characterized by**:
said fuel distribution pipe assembly (30) comprising a main fuel distribution pipe (33) extending in a longitudinal direction of said direct fuel injection engine (1) from the front to the back in which said longitudinal axis of said output shaft extends and being disposed on one side of a longitudinal axis (y) of said fuel injector (22) opposite to another side of said longitudinal axis (y) of said fuel injector (22) on which said intake port (7) extends, discrete fuel distribution pipes (34) branching off from said main fuel distribution pipe (33) and leading to said fuel injectors (22), respectively, and fuel distribution pipe assembly fixing means (31) disposed between said longitudinal axis (y) of said fuel injector (22) and said main fuel distribution pipe (33) for securing said fuel distribution pipe assembly (30) to said direct fuel injection engine (1).

2. A fuel injection device (A) for a direct fuel injection engine (1) as defined in claim 1, wherein said fuel injector (22) is secured to said direct fuel injection engine (1) by injector fixture means (26) disposed in an approximately same position in a direction perpendicularly to said longitudinal axis of said output shaft as a position in which said fuel injector (22) is arranged and said fuel distribution pipe assembly fixture means (31) is disposed on one of opposite sides of said fuel injector (22) in a vertical direction of said direct fuel injection engine (1) with respect to said longitudinal axis (y) of said fuel injector (22).

3. A fuel injection device (A) for a direct fuel injection engine (1) as defined in claim 2, wherein said fuel injector (22) is provided with coupling means (23) through which said fuel injector (22) is electrically connected to a fuel injection control system by way of a wire, said coupling means being disposed on another side of said opposite sides of said fuel injector (22) in said vertical direction of said direct fuel injection engine (1) with respect to said longitudinal axis (y) of said fuel injector (22).

4. A fuel injection device (A) for a direct fuel injection engine (1) as defined in claim 3, wherein said one side surface (2a) of said direct fuel injection engine (1) in which said intake port (7) at said one end thereof opens is formed so as to project laterally outward from said direct fuel injection engine (1), and said injector fixture means (26) are disposed in a position closer to said fuel injection nozzle end of said fuel injector (22) in a direction of said longitudinal axis (y) of said fuel injector (22) than said one side surface (2a)

5. A fuel injection device (A) for a direct fuel injection engine (1) as defined in claim 2, wherein a fuel pressure sensor (36) operative to detect pressure of fuel in said fuel distribution pipe assembly (30) is installed to an end of said main fuel distribution pipe (33) on a front side of said fuel injector (22) in said longitudinal direction where said fuel distribution pipe assembly fixture means (31) is positioned with respect to said fuel injector (22).

6. A fuel injection device (A) for a direct fuel injection engine (1) as defined in claim 2, wherein said direct fuel injection engine (1) has two said intake ports (7) for each said cylinder (4) between which said fuel injector (22) is disposed, each said intake port (7) having an irregular cross section so that said fuel injector (22) is put as closely to said intake port (7) as possible without mechanical interference with said intake port (7) and said fuel distribution pipe assembly fixture means (31) is disposed closer to one of said two intake ports (7) than another of said two intake ports (7).

7. A fuel injection device (A) for a direct fuel injection engine (1) as defined in claim 1, wherein said direct fuel injection engine (1) is of a type having said cylinders (4) arranged in a straight row in said longitudinal direction, each said cylinder (4) being provided with two said intake ports (7) and two exhaust ports (9), two intake valves (1) and two exhaust valves (10), and a spark plug (11) disposed so as to be in approximate alignment with a vertical axis (x) of said cylinder (4) and encircled by said two intake valves (10) and said two exhaust valves (10).

8. A fuel injection device (A) for a direct fuel injection engine (1) as defined in claim 1, wherein said direct fuel injection engine (1) is provided on one of opposite sides thereof with an intake passage assembly (12, 14) which is in communication with each said cylinder (4) and extends laterally outward and then downward from said direct fuel injection engine (1) so as to surround said fuel distribution pipe assembly (30).

## Patentansprüche

1. Kraftstoffeinspritzvorrichtung (A) für eine Brennkraftmaschine (1) mit Direkteinspritzung, die Einlaßmündungen (7) aufweist, wobei jede Einlaßmündung (7) eine Endöffnung in einer Seitenfläche (2a) an einer von einander gegenüberliegenden Seiten der Brennkraftmaschine (1) mit Direkteinspritzung in einer horizontalen Richtung in Bezug auf einer Längsachse einer Abtriebswelle der Brennkraftmaschine (1) mit Direkteinspritzung und eine weitere Endöffnung an einer Brennkammer (7) von jedem der Zylinderkammer (4) der Brennkraftmaschine (1) mit Direkteinspritzung hat und wobei die Kraftstoffeinspritzvorrichtung (A) Kraftstoffinjektoren (22) hat, die mit ihren Längsachsen so positioniert sind, daß sie sich etwa senkrecht zu der Längsachse der Abtriebswelle erstrecken, wobei jeder Kraftstoffinjektor (22) mit einem Kraftstoffeinspritzdüsenende in enger Nachbarschaft mit dem anderen Ende der Einlaßmündung (7) angeordnet ist, um Kraftstoff direkt in die Brennkammer (6) einzuspritzen, und mit einem Kraftstoffeinlaßende an eine Kraftstoffverteilerrohranordnung (30) angeschlossen ist, die auf der einen Seite der Brennkraftmaschine (1) mit Direkteinspritzung angeordnet ist, **dadurch gekennzeichnet, daß**:
die Kraftstoffverteilerrohranordnung (30) ein Hauptkraftstoffverteilerrohr (33) aufweist, das sich in einer Längsrichtung der Brennkraftmaschine (1) mit Direkteinspritzung von der Vorderseite zu der Rückseite erstreckt, in der sich die Längsachse der Abtriebswelle erstreckt, und auf einer Seite einer Längsachse (y) des Kraftstoffinjektors (22) gegenüberliegend zu einer anderen Seite der Längsachse (y) des Kraftstoffinjektors (22), auf der sich die Einlaßmündung (7) erstreckt, angeordnet ist, wobei diskrete Kraftstoffverteilerrohre (34) von dem Hauptkraftstoffverteilerrohr (33) abzweigen und jeweils zu den Kraftstoffinjektoren (22) führen, und Kraftstoffverteilerrohranordnung-Fixierungsmittel (31), die zwischen der Längsachse (y) des Kraftstoffinjektors (22) und dem Hauptkraftstoffverteilerrohr (33) angeordnet sind, um die Kraftstoffverteilerrohranordnung (30) an der Brennkraftmaschine (1) mit Direkteinspritzung zu befestigen.

2. Kraftstoffeinspritzvorrichtung (A) für eine Brennkraftmaschine (1) für Direkteinspritzung nach Anspruch 1, worin der Kraftstoffinjektor (22) an der Brennkraftmaschine (1) für Direkteinspritzung durch Injektofixierungsmittel (26) befestigt ist, die in näherungsweise der gleichen Position in einer Richtung senkrecht zu der Längsrichtung der Abtriebswelle als eine Position angeordnet sind, in der der Kraftstoffinjektor (22) angeordnet ist, und die Kraftstoffverteilerrohranordnung-Fixierungsmittel (31) auf eine der gegenüberliegenden Seiten des Kraftstoffinjektors (22) in einer vertikalen Richtung der Brennkraftmaschine (1) mit Direkteinspritzung in Bezug auf die Längsachse (y) des Kraftstoffinjektors (22) angeordnet sind.

3. Kraftstoffeinspritzvorrichtung (A) für eine Brennkraftmaschine (1) mit Direkteinspritzung nach Anspruch 2, worin der Kraftstoffinjektor (22) mit Kupplungsmitteln (23) versehen ist, durch die der Kraftstoffinjektor (22) elektrisch mit einem Kraftstoffeinspritz-Steuersystem durch einen Draht verbunden ist, wobei die Kupplungsmittel auf einer anderen Seite der gegenüberliegenden Seiten des Kraftstoffinjektors (22) in einer vertikalen Richtung der Brennkraftmaschine (1) mit Direkteinspritzung in Bezug auf die Längsachse (y) des Kraftstoffinjektors (22) angeordnet sind.

4. Kraftstoffeinspritzvorrichtung (A) für eine Brennkraftmaschine (1) mit Direkteinspritzung nach Anspruch 3, worin die eine Seitenfläche (2a) der Brennkraftmaschine (1) mit Direkteinspritzung, in der die Einlaßmündung (7) an dem einen Ende davon sich öffnet, so ausgebildet ist, daß sie seitlich von der Brennkraftmaschine (1) mit Direkteinspritzung weg vorsteht, und worin die Injektorfixierungsmittel (26) in einer Position näher bei dem Kraftstoffeinspritzdüsenende des Kraftsstoffinjektors (22) in einer Richtung der L

5. Kraftstoffeinspritzvorrichtung (A) für eine Brennkraftmaschine (1) mit Direkteinspritzung nach Anspruch 2, worin ein Kraftstoffdrucksensor (36), der wirksam ist, um den Druck des Kraftstoffes in der Kraftstoffverteilerrohranordnung (30) zu detektieren, an einem Ende des Hauptkraftstoffverteilerrohres (33) auf einer Vorderseite des Kraftstoffinjektors (22) in der Längsrichtung installiert ist, wo die Kraftstoffverteilerrohranordnung-Fixierungsmittel (31) in Bezug auf den Kraftstoffinjektor (22) positioniert sind.

6. Kraftstoffeinspritzvorrichtung (A) für eine Brennkraftmaschine (1) für Direkteinspritzung nach Anspruch 2, worin die Brennkraftmaschine (1) mit Direkteinspritzung (2) Eingangsmündungen (7) für jeden Zylinder (4) hat, zwischen denen der Kraftstoffinjektor (22) angeordnet ist, wobei jede Einlaßmündung (7) einen irregulären Querschnitt hat, so daß der Kraftstoffinjektor (22) so nahe wie möglich bei der Einlaßmündung (7) ohne mechanische Behinderung der Einlaßmündung (7) angeordnet ist, wobei die Kraftstoffverteilerrohranordnung-Fixierungsmittel (31) mehr zu einem der zwei Einlaßmündungen (7) als bei dem anderen der zwei Einlaßmündungen (7) angeordnet ist.

7. Kraftstoffeinspritzvorrichtung (A) für eine Brennkraftmaschine (1) mit Direkteinspritzung nach Anspruch 1, worin die Brennkraftmaschine (1) mit Direkteinspritzung von dem Typ ist, bei dem die Zylinder (4) in einer geraden Reihe in der Längsrichtung angeordnet sind, wobei der Zylinder (4) mit zwei Einlaßmündungen (7) und zwei Auslaßmündungen (9), zwei Einlaßventilen (1) und zwei Auslaßventilen (10) und einer Zündkerze (11) versehen ist, die so angeordnet ist, daß sie in näherungsweise Ausrichtung mit einer vertikalen Achse (x) des Zylinders (4) angeordnet und von zwei Einlaßventilen (10) und zwei Auslaßventilen (10) umgeben ist.

8. Kraftstoffeinspritzvorrichtung (A) für eine Brennkraftmaschine (1) mit Direkteinspritzung nach Anspruch 1, worin die Brennkraftmaschine (1) mit Direkteinspritzung an einem Ende von gegenüberliegenden Seiten davon mit einer Einlaßkanalanordnung (12, 14) versehen ist, die mit jedem der Zylinder (4) in Verbindung steht und sich seitlich nach außen und dann von der Brennkraftmaschine (1) mit Direkteinspritzung nach unten erstreckt, um die Kraftstoffverteilerrohranordnung (13) zu umgeben.

## Revendications

1. Système d'injection de carburant (A) pour un moteur à injection directe (1) qui a des orifices d'entrée (7), chaque ledit orifice d'entrée (7) ayant un bout ouvert sur une sur directe (1) dans une direction horizontale concernant un axe longitudinal face latérale (2a) à l'une des parties opposées audit moteur à injection d'un arbre de sortie dudit moteur à injection directe (1) et l'autre bout ouvert à une chambre de combustion (6) de chacun des cylindres (4) dudit moteur à injection directe (1), et le système d'injection de carburant (A) ayant les injecteurs de carburant (22) qui sont positionnés avec leurs axes longitudinaux s'étendant approximativement en direction perpendiculaire audit axe longitudinal dudit arbre de sortie, chaque ledit injecteur de carburant (22) ayant à un bout un ajutage d'injection logé tout près dudit autre bout dudit orifice d'entrée (7) de sorte qu'il pulvérise du carburant directement dans la chambre de combustion (6) et un bout d'entrée du carburant connecté à l'ensemble à conduits de distribution du carburant (30) disposé sur ladite une partie dudit moteur à injection directe (1), et
étant **caractérisé par**:
- ledit ensemble de distribution de carburant (30) comprenant un conduit principal de distribution du carburant (33) s'étendant dans une direction longitudinale dudit moteur à injection directe (1) à partir de devant au derrière, où ledit axe longitudinal dudit arbre de sortie s'étend et, étant disposé sur une partie de l'axe longitudinal (y) dudit injecteur de carburant (22) opposée à l'autre partie dudit axe longitudinal (y) dudit injecteur de carburant (22) sur lequel ledit orifice d'entrée (7) donne de l'extension aux conduits séparés de distribution du carburant (34) dérivant du conduit principal de distribution de carburant (33) et conduisant respectivement audits injecteurs de carburant (22) et le moyen de fixation de l'ensemble à conduits de distribution du carburant (31) disposé entre ledit axe longitudinal (y) dudit injecteur de carburant (22) et ledit conduit principal de distribution du carburant (33) pour le fixage dudit ensemble à conduits de distribution carburant (30) audit moteur à injection directe (1).

2. Système d'injection de carburant (A) pour un moteur à injection directe (1) selon la revendication 1, où ledit injecteur de carburant (22) est fixé dudit moteur à injection directe (1) par les moyens de fixation de l'injecteur (26), disposés approximativement dans la même position dans une direction perpendiculaire audit axe longitudinal dudit arbre de sortie, comme une position dans laquelle ledit injecteur de carburant (22) est assis et ledit moyen de fixage de l'ensemble à conduits de distribution de carburant (31) est disposé sur l'une des parties opposées dudit injecteur de carburant (22) dans une direction verticale dudit moteur à injection directe (1) concernant ledit axe longitudinal (y) dudit injecteur de carburant (22).

3. Système d'injection de carburant (A) pour un moteur à injection directe (1) selon la revendication 2, où ledit injecteur de carburant (22) est prévu avec moyens de couplage (23) par lesquels ledit injecteur de carburant (22) est connecté électriquement à un système de commande de l'injection par un conducteur, ledit moyen de couplage étant disposé sur l'autre partie desdites parties opposées dudit injecteur de carburant (22) dans ladite direction verticale dudit moteur à injection directe (1) concernant ledit axe longitudinal (y) dudit injecteur de carburant (22).

4. Système d'injection de carburant (A) pour un moteur à injection directe (1) selon la revendication 3, où ladite une surface latérale (2a) dudit moteur à injection directe (1) dans lequel ledit orifice d'entrée (7) audit un bout ouvert de celui-ci, est formé pour projeter latéralement vers l'extérieur à partir dudit moteur à injection directe (1 ) et lesdits moyens de fixage dudit injecteur (26) sont disposés dans une position tout près dudit ajutage de bout dudit injecteur de carburant (22) dans une direction dudit axe longitudinal (y) dudit injecteur de carburant (22) que de ladite une surface latérale (2a).

5. Système d'injection de carburant (A) pour un moteur à injection directe (1) selon la revendication 2, où un senseur de pression du carburant (36) opératif pour détecter la pression du carburant dans ledit ensemble à conduits de distribution du carburant (30) est installé à un bout dudit conduit de distribution principale (33) sur une partie frontale dudit injecteur de carburant (22) dans ladite direction longitudinale où lesdits moyens de fixage de l'ensemble à conduits de distribution de carburant (31) est positionné concernant ledit injecteur de carburant (22).

6. Système d'injection de carburant (A) pour un moteur à injection directe (1) selon la revendication 2, où ledit moteur à injection directe (1) a lesdits deux orifices d'entrée (7) pour chaque ledit cylindre (4) entre lesquels ledit injecteur de carburant (22) est disposé, chaque ledit orifice d'entrée(7) ayant une section transversale irrégulière de sorte que ledit injecteur de carburant (22) est assis comme fermeture audit orifice d'entrée (7) s'il est possible sans interférence mécanique avec ledit orifice d'entrée (7) et ledit moyen de fixage de l'ensemble à conduits de distribution du carburant (31) est disposé tout près de l'un desdits deux orifices d'entre (7) que de l'autre desdits deux orifices d'entrée (7).

7. Système d'injection de carburant (A) pour un moteur à injection directe (1) selon la revendication 1, où ledit moteur à injection directe (1) est du type ayant lesdits cylindres (4) arrangés dans une rangée droite dans ladite direction longitudinale, chacun desdits cylindres (4) étant prévu avec deux desdits orifices d'entrée (7) et deux orifices d'évacuation (9), deux valves d'admission (1) et deux valves d'évacuation (10), et une bougie (11) disposée de sorte qu'elle soit en alignement approximatif avec l'axe vertical (x) dudit cylindre (4) et encerclée par lesdites deux valves d'admission (10) et lesdites deux valves d'évacuation (10).

8. Système d'injection de carburant (A) pour un moteur à injection directe (1) selon la revendication 1, où ledit moteur à injection directe (1) est prévu dans l'une des parties opposées de celui-ci avec un ensemble d'admission (12, 14) qui est en communication avec chaque ledit cylindre (4) et s'étend latéralement à l'extérieur et puis en bas à partir dudit moteur à injection directe (1) pour contourner ledit ensemble à conduits de distribution du carburant (30).
